# EUROPEAN PATENT SPECIFICATION

(11) **EP 2 624 520 B1**
(45) Date of publication and mention of the grant of the patent: **22.08.2018**
(21) Application number: 12290036.8
(22) Date of filing: 31.01.2012
(51) Int. Cl.: H04L 29/06, H04L 29/08

(54) **Method, control device and delivery infrastructure for improving efficiency in adaptive streaming**
Verfahren, Steuervorrichtung und Versorgungsinfrastruktur zur Verbesserung der Effizienz beim adaptiven Streaming
Procédé, dispositif de contrôle et infrastructure de livraison pour améliorer l'efficacité de la diffusion adaptative

(43) Date of publication of application: 07.08.2013
(73) Proprietor: Provenance Asset Group LLC, Essex, CT 06426 (US)
(72) Inventor: Rimac, Ivica, 71686 Remseck (DE); Guo, Yang, 08550 Princeton Junction (US); Esteban, Jairo, 07728 Freehold (US); Beck, Andre, 60510 Batavai (US); Hilt, Volker, 07748 Middletown (US)
(74) Representative: DREISS Patentanwälte PartG mbB

(56) References cited:
- WO-A1-2011/015243
- US-A1- 2011 082 924

## Description

The present invention relates to the area of adaptive streaming of multimedia content via HTTP.

Adaptive streaming is a technology for providing multimedia contents independently to multiple users. Multimedia content can be any kind of multimedia data, including video and audio data. Adaptive streaming requires at least one client, also referred to as receiving side, which is a user device, and a delivery infrastructure for providing the multimedia contents. The delivery infrastructure and the receiving side are connected via a data network, which enables transmissions of data packets based on HTTP.

The delivery infrastructure is adapted to provision the multimedia content as different representations with different data rates. The receiving side requests provisioning of one of the available representations of the multimedia content based on a determination at the receiving side of the most suitable representation. Accordingly, the receiving side uses an algorithm to evaluate the most suitable representation under consideration of measured throughput, buffer status, computational power, and/or others. The multimedia content is usually provisioned in segments, also referred to as chunks, which represent a part of the multimedia content. More particularly, the receiving side requests chunks from the delivery infrastructure, whereby it may determine for every requested chunk a desired representation to be provisioned from the delivery infrastructure. One example of such an algorithm is the HTTP adaptive streaming algorithm, also referred as HAS-algorithm. Adaptive streaming is for example used in current computer technology by Microsoft Silverlight or Adobe. In HTTP adaptive streaming, the receiving side requests chunks that the delivery infrastructure reactively provisions. The receiving side does not receive explicit information about communication status, the receiving side is on its own to infer conditions etc. Thus, the receiving side uses an algorithm for estimating network conditions based on regular HTTP exchange and local info, i.e. using the size of data chunks, measured time for delivery, and/or local buffer drainage.

Adaptive streaming is challenging the efficiency of delivery infrastructures, since adaptive streaming is pull-based and the receiving side decides when and which segment of multimedia content is requested next at which representation. The availability of alternative representations of each segment in combination with heterogeneous and time-varying throughputs achieved by the population of the receiving side and varying conditions of the data network can cause several problems, which challenge the provisioning of the multimedia content by the delivery infrastructure. Especially when the infrastructure comprises a cache, which can be a single caching device or a caching network, efficiency is required for preparing multimedia content in the cache to be provisioned, so that an improved user experience in multimedia streaming is achieved. Changes in the requested representation of the multimedia content result in additional effort for the delivery infrastructure, thereby decreasing its overall performance. With an increasing number of representations of the multimedia content available at the delivery infrastructure, the challenge increases due to smaller temporary locality and/or correlation in the requests. Even requests from receiving sides connected to the same part of the data network can vary due to varying network and system conditions
US 2011/00829924 A1 discloses a technique for managing network traffic by editing a manifest file that is provided to clients.

It is therefore an object of the present invention to provide a method and a control device for improving efficiency in adaptive streaming and a delivery infrastructure with improved efficiency in adaptive streaming.

This object is achieved by the independent claims. Advantageous embodiments are given in the dependent claims. In particular, the present invention provides a method for improving efficiency in adaptive streaming of multimedia content over a data network via HTTP, whereby a delivery infrastructure is adapted to provide the multimedia content at different representations with different data rates to at least one receiving side, and each receiving side may request individually provisioning of one of the different representations of the multimedia content, comprising the steps of receiving at a control device status information indicating a communication status, determining communication conditions from the received information, and adapting at the delivery infrastructure for each receiving side the provisioning of the requested representation of the multimedia content in response to the determined communication conditions.
Furthermore, the present invention provides a control device for improving efficiency in adaptive streaming of multimedia content over a data network via HTTP, whereby a delivery infrastructure is adapted to provide the multimedia content at different representations with different data rates to at least one receiving side, and each receiving side may request individually provisioning of one of the different representations of the multimedia content, comprising a reception unit for receiving status information indicating a communication status, a processing unit for determining communication conditions from the received information, and an output unit for providing to the delivery infrastructure an adaptation of the provisioning of the requested representation of the multimedia content for the at least one receiving side in response to the determined communication conditions.

This object is also achieved by a delivery infrastructure with improved efficiency in adaptive streaming of multimedia content over a data network via HTTP, whereby the delivery infrastructure is adapted to provide the multimedia content at different representations with different data rates to at least one receiving side, the delivery infrastructure is adapted to receive a request from the at least one receiving side for provisioning of one of the different representations of the multimedia content, and the delivery infrastructure comprises a control device for improving efficiency in adaptive streaming as specified above.

Basic idea of the invention is to implicitly manipulate the receiving side by adapting the provisioning of the requested representation of the multimedia content to each receiving side, so that the receiving side starts requesting a representation of the multimedia content which improves overall streaming efficiency and experience to the users. This manipulation is performed based on status information indicating a communication status, including status information regarding the receiving side, the data network and/or the delivery infrastructure, and comprises information about the requests from the at least one receiving side for provisioning of representations of the multimedia content. The information is received by the control device, which is independent from the receiving side. The status information is evaluated to determine communication conditions, whereupon the provisioning of the requested representation of the multimedia content is adapted at the delivery infrastructure to increase the streaming efficiency. The different representations of the multimedia content can be independent representations of the multimedia content, each independent representation having a different data rate, or comprises an independent base representation, i.e. a base stream, to which additional dependent streams can be added or overlaid, thereby forming different representations of the multimedia content. The multimedia content, i.e. its representations, is usually provided in data segments, also referred to as chunks, which are preferably equally sized in respect to a covered time span. Therefore, the provisioning of a representation of the multimedia content can be changed at the beginning of a due segment of the multimedia content.

For example, when the receiving side changes to a representation of the multimedia content having an increased data rate in order to provide an increased user experience, the requested data rate may not be maintained, and the receiving side falls back to requesting a representation with a reduced data rate. Nevertheless, the receiving side can attempt to switch again to a presentation with a higher data rate. This results in an increased load of the delivery infrastructure, since it is necessary to frequently prepare different representations of the multimedia content for provisioning to the receiving side. In particular, data in a cache of the delivery infrastructure has to be frequently replaced by data from the peripheral storage, as described below. This may cause a decrease of the performance of the delivery infrastructure, so that the receiving side may even decide to request a representation having a data rate below the initial data rate. Since this is not satisfactory for the receiving side, the receiving side may again start requesting a representation of the multimedia content with an increased data rate. This can lead to unstable conditions and an excessive increase of load of the delivery infrastructure, which may result in oscillations between requests of different representations, and even a feedback loop can arise, further decreasing the overall performance of the delivery infrastructure. By adapting the provisioning of the multimedia content at the delivery infrastructure, the receiving side may be to implicitly manipulated to refrain from frequently changing between different data rates.

The control device is adapted to perform the method recited above. The control device is an individual device that can be located essentially anywhere, where it can receive the status information and provide the adaptation of the provisioning of the requested representation of the multimedia content to the delivery infrastructure. The control device, in particular the reception unit, therefore comprised at least one suitable interface for receiving the information, which is preferably a network interface or any other suitable interface. The control device, i.e. the output unit, comprises an interface for providing the adaptation to the delivery infrastructure, which can be similar to the interface of the reception unit, or a different interface. The interfaces can be provided as a combined, single interface. The adaptation can be provided from the control unit to the delivery infrastructure by way of control commands.

The delivery infrastructure can be any device or system of devices for providing the multimedia content at different representations. The control device can be a separate device functionally integrated in the delivery infrastructure, or an integral part thereof.

According to a preferred embodiment the delivery infrastructure comprises a cache and a peripheral storage, and the control device is adapted to provide the adaptation of the provisioning of the requested representation of the multimedia content for the at least one receiving side to the cache. This refers to any kind of cache and a peripheral storage where fast memory, i.e. the cache, is used for preloading and caching data from the peripheral storage in order to speed access to data, since the input/output from the peripheral storage is slow. The preloading of the multimedia content and/or particular representations of the multimedia content are referred to as preparation of the multimedia content and/or particular representations of the multimedia content. Accordingly, the cache can be a disk-based caching system, a caching server, or caching memory available in computer systems. Accordingly, the cache enables optimized provisioning of the multimedia content by the combination of the cache and the peripheral storage. The cache can be implemented as a single caching device, or as a caching network. The peripheral storage is preferably a server providing slow but cheap storage for the multimedia contents and available representations thereof. In general, when the request for provisioning of a multimedia content is received, the multimedia content is in its requested representation prepared at the cache by copying it from the server to the cache, so that it can be rapidly provisioned to the receiving side, unless it is already available in the cache. The cache enables efficient streaming of the multimedia content to the receiving side, since it allows fast provisioning of multimedia content. Therefore, its efficiency has direct impact on the overall performance of the delivery infrastructure, and an optimization of interactions between the cache and the peripheral storage accounts for increasing efficiency in adaptive streaming.

According to a preferred embodiment, the step of receiving status information indicating a communication status comprises receiving information indicating network condition of the data network between the delivery infrastructure and at least one receiving side. The information indicating network condition may comprise a network load and variations of the network load, so that the communication conditions can be determined to identify a suitable representation of the multimedia content. E.g. in case of frequent variations of the network load, a representation suitable for worst case condition may improve overall efficiency of the delivery infrastructure, since preparation of the representation of the multimedia content, e.g. in the cache, for provisioning to the receiving side can be facilitated. The adaptation of the presentation of the multimedia content can be based on previous network condition and/or a prediction of future network conditions. The information indicating network condition of the data network is information about the network itself and does not to refer e.g. to a data rate as obtained at the receiving side, which depends not only on network conditions.

According to a preferred embodiment the delivery infrastructure provides the multimedia content in segments, and the step of receiving status information indicating a communication status comprises receiving information indicating availability of segments of representations of the multimedia content, which are prepared for provisioning to the receiving side. The segments are also referred to as chunks and cover a playout time, i.e. a time span of the multimedia content covered by the segment. The segments can be prepared for provisioning at the delivery infrastructure, e.g. by copying them to a cache for fast access. Accordingly, it can be determined, if a segment of a suitable representation of the multimedia content is already available, so that the receiving side can be implicitly manipulated to request this representation and no further segment of a different representation has to be prepared. Thereby, a hit rate of the delivery infrastructure, i.e. the cache, can be improved, reducing the load of the delivery infrastructure for preparing segments. Delay due to the preparation of the multimedia content can be reduced. This can be done under consideration of the playout time of the segment.

In a preferred embodiment the step of receiving status information indicating a communication status comprises receiving information indicating a load status of the delivery infrastructure. The load status indicates an availability of the delivery infrastructure for provisioning a representation of the multimedia content to the receiving side. In particular, the load status can refer to a traffic load for preparation of representations of multimedia contents, e.g. load for copying contents from the peripheral storage to the cache, or a load of the delivery infrastructure for provisioning the representation of the multimedia content to the at least one receiving side, e.g. a network load. When the load status indicates, that a further increase of the load is not possible, the at least one receiving side can be implicitly manipulated, so that the network load can be reduced. E.g. the receiving side can be implicitly manipulated to request an already prepared representation of the multimedia content. Another example is to manipulate the at least one receiving side to request a representation having a lower data rate, thereby reducing the network load of the delivery infrastructure.

Advantageously, the step of receiving status information indicating a communication status comprises receiving information indicating an algorithm of the receiving side for requesting the provisioning of a representation of the multimedia content. The details of the algorithm used at the receiving side can be used to anticipate requests for representations of the multimedia content from the receiving side. Accordingly, the delivery infrastructure can anticipate a request for a representation, so that it can be easily provisioned to the receiving side and aligned with other requests. Knowledge about the algorithm facilitates the implicit manipulation of the receiving side due to a possible prediction of its behavior upon adapting the provisioning of the requested representation. Parameters used for the algorithm at the receiving side may comprise history information of previously provisioned representations of the multimedia content. The history information is implicitly available at the delivery infrastructure, so that this anticipation and/or implicit manipulation can be performed based on the same data used by the receiving side.

In a preferred embodiment the step of receiving status information indicating a communication status comprises receiving information from the at least one receiving side, the data network, and/or the delivery infrastructure. Accordingly, the reception unit of the control device has at least one suitable interface for receiving the status information. For example, the receiving side can provide information regarding its algorithm as a kind of initialization of the streaming of the multimedia content. Also information from the data network and/or the delivery infrastructure can be provided as initialization. Alternatively or additionally, information from the data network and/or the delivery infrastructure can be provided dynamically, while the multimedia content is provisioned to the receiving side. The status information can also be provided together from the data network or the delivery infrastructure, or by a particular data collection device, which then provides this information to the control device.

According to a preferred embodiment the delivery infrastructure comprises a cache, and the step of receiving status information indicating a communication status comprises receiving information from the cache. The information from the cache can be received in analogy to the information received from the sources specified above.

According to a preferred embodiment the step of determining communication conditions from the received information comprises calculating an available data rate of the delivery infrastructure. Generally, streaming from the delivery infrastructure comprises provisioning the multimedia content to at least one receiving side, whereby different multimedia contents can be provided to the receiving sides. Nevertheless, identical multimedia content can also be provisioned to different receiving sides. The receiving sides have to share resources of the delivery infrastructure, which can be a limiting factor for provisioning the multimedia content to the receiving sides. These resources include available bandwidths when accessing the data network and/or a bandwidth for copying representations of the multimedia content from the peripheral storage to the cache.

In a preferred embodiment, the step of determining communication conditions from the received information comprises comparing requests for provisioning of a representation of the content by different receiving sides. Accordingly, requests for the same multimedia content and/or the same representation thereof and/or the same segment thereof can be determined to improve the preparation, e.g. in the cache. The delivery infrastructure can be prepared to have frequently requested multimedia contents, or even frequently requested representations of the multimedia contents readily available for provisioning to the at least one receiving side, so that the load for preparation of the provisioning of the multimedia content can be reduced. In particular, frequently requested multimedia content can be kept readily available at the delivery infrastructure. Furthermore, requests from different receiving sides can be dynamically evaluated, e.g. when a recently requested multimedia content or a recently requested representation of the multimedia content is already prepared for provisioning to the receiving side, the receiving side can be implicitly manipulated by the adaptation of the provisioning of the representation of the multimedia content to request this available representation. Also when receiving sides request different representations of the same multimedia content, this can be determined to manipulate at least one of these receiving side, so that both receiving sides request the same representation of the multimedia content. When receiving sides request the same multimedia content with a time delay, these requests can be implicitly manipulated, so that they are aligned in time.

According to a preferred embodiment the step of adapting at the delivery infrastructure for the at least one receiving side the representation of the multimedia content in response to the determined communication conditions comprises provisioning the requested representation of the multimedia content at the delivery infrastructure with a data rate different than the data rate of the provisioned representation. This implicitly indicates the receiving side that a different representation of the multimedia content is preferably to be requested. Preferably, the requested representation of the multimedia content is provisioned to the receiving with a lower data rate than the data rate of the provisioned representation. Pacing the transmission of a stream is easy and can be fully controlled by the delivery infrastructure, assuming that the requested representation was previously received correctly at the receiving side. If e.g. the data network does not provide a bottleneck, the requested representation of the multimedia content can be provisioned to the receiving with a higher data rate under control of the delivery infrastructure.

According to a preferred embodiment the step of adapting at the delivery infrastructure for the at least on receiving side the representation of the multimedia content in response to the determined communication conditions comprises delaying provisioning of the requested representation of the multimedia content to the at least one receiving side. Due to limited resources for preparing the multimedia content, e.g. a limited size of the cache, a preparation of a representation of the multimedia content is limited in size, resulting in the preparation covering a limited time span. Accordingly, when the same representation of multimedia content is requested by at least two receiving sides with a time delay bigger than the limited time, the requested representation of the multimedia content has to be prepared twice by the delivery infrastructure, when the preparation of other multimedia contents is requested in the meantime. Hence, the preparation can be facilitated by delaying the provisioning of the multimedia content to the receiving side, which has first requested the provisioning of a representation of the multimedia content, so that the time between the provisioning according to the two requests is reduced e.g. below the limited time and the prepared multimedia content can be reused. Short delays will probably not even be noticed by a user, but can reduce the overall load of the delivery infrastructure as described above.

According to a preferred embodiment the step of adapting at the delivery infrastructure for each receiving side the provisioning of the requested representation of the multimedia content in response to the determined communication conditions comprises provisioning a different representation of the multimedia content than the requested representation of the multimedia content to the at least one receiving side. When the receiving side receives the representation different than the requested representation, it can still use this representation for uninterrupted streaming. Additionally, the receiving side is implicitly aware that the delivery infrastructure prefers the receiving side to request a different representation of the multimedia content and can accordingly adapt future requests.

The above-described principles of the method can be applied by a person skilled in the art easily to the control device and the delivery infrastructure, and vice versa.

Some embodiments of apparatus and/or methods in accordance with embodiments of the present invention are now described, by way of example only, and with reference to the accompanying drawings, in which:

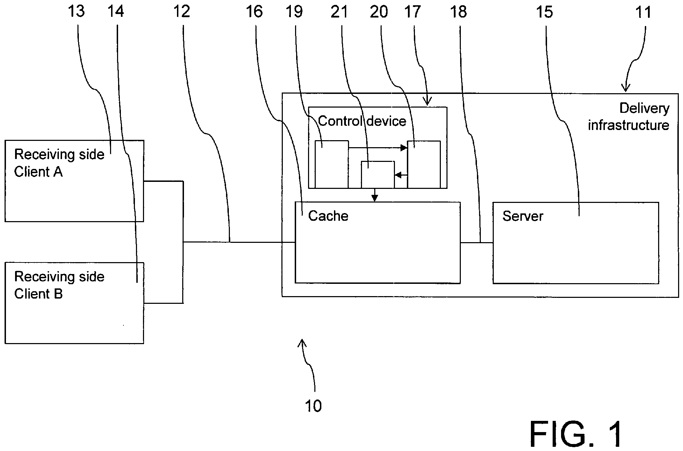

- Fig. 1: shows a communication system for adaptive streaming according to one embodiment.

Fig. 1 shows a communication system 10 for adaptive streaming according to a preferred embodiment. The communication system 10 comprises a delivery infrastructure 11, a data network 12 for data transmission via HTTP, and two receiving sides 13, 14, which are respectively denoted as client A and client B in Fig. 1. The number of receiving sides 13, 14 is merely chosen by way of example for the purpose of description and not limited to two.

The delivery infrastructure 11 comprises a server 15 as peripheral storage, a cache 16 and a control device 17. The server 15 and the cache 16 are connected via data connection 18, and the cache 16 is connected to the data network 12. Although the control device 17 is in this embodiment part of the delivery infrastructure 11, it can be an individual device in different embodiments.

The delivery infrastructure 11 is used for adaptive streaming of multimedia content via HTTP over the data network 12 to the receiving sides 13, 14. The server 15 stores the multimedia content at different representations with different data rates. Upon reception of a request from the receiving side 13, 14 to provision multimedia content, a requested representation of the multimedia content is transferred from the server 15 via data connection 18 to the cache 16 and prepared for provisioning to the receiving side 13, 14. The delivery infrastructure 11 is further adapted to provision the multimedia content individually for each receiving side 13, 14, including individually provisioning a representation of the multimedia content to each receiving side 13, 14. The cache 16 provisions the representation of the multimedia content via data network 12 to the receiving side 13, 14. The representations of the multimedia content are arranged in segments, also referred to as chunks.

The control device 17 is used for improving efficiency in adaptive streaming and comprises a reception unit 19 for receiving status information indicating a communication status, a processing unit 20 for processing the status information from the reception unit 19 and determining communication conditions, and an output unit 21 for providing to the cache 16 an adaptation of the provisioning of a representation of the multimedia content for each receiving side 13, 14 in response to the determined communication conditions. Accordingly, the control device 17 performs control of the cache 16 to adapt the provisioning of the requested representation of the multimedia content to the receiving sides 13, 14 to implicitly manipulate the receiving sides 13, 14 to request a representation of the multimedia content according to the determined communication conditions.

The reception unit 19 receives status information indicating a communication status via a not shown network interface of the reception unit 19. The information in this embodiment comprises information indicating network condition of the data network 12, which is provided by the data network 12, information indicating availability of segments of representations of the multimedia content, which are prepared for provisioning to the receiving side 13, 14 in the cache 16, information indicating a load status of the delivery infrastructure 11, and information indicating an algorithm of the receiving side 13, 14 to determine a representation of the multimedia content to be requested. The information further comprises information about the requests from the at least one receiving side 13, 14 for provisioning of representations of the multimedia content, which is in this embodiment forward from the cache 16. The information is received via the network interface from the receiving side 13, 14, the data network 12, the cache 16 and the delivery infrastructure 11.

The control device 17 processes the received information in the processing unit 20 to determine communication conditions. This comprises calculating an available data rate at the cache 16 of the delivery infrastructure 11, which is in this embodiment based on evaluation of the above listed status information.

When both receiving sides 13, 14 request provisioning of the same multimedia content from the delivery infrastructure 11, the determination of the communication conditions further comprises comparing the requests for provisioning of the requested representation of the content by the different receiving sides 13, 14. Accordingly, the control device 17 controls the cache 16 to adapt the provisioning of the requested representation of the multimedia content, so that the receiving sides 13, 14 will be implicitly manipulated to request the same representation of the multimedia content. In case one representation of the multimedia content is available in the cache 16, e.g. due to a previous request, both receiving sides 13, 14 will be implicitly manipulated to request this representation of the multimedia content.

Although provisioning of a representation of the multimedia content to one or more of the receiving sides 13, 14 according to their requests may be possible, communication conditions as determined by the processing unit 20 can indicate that a different representation is preferred in order to improve overall efficiency of the delivery infrastructure 11.

Adapting at the delivery infrastructure 11 for each receiving side 13, 14 the provisioning of the representation of the multimedia content to the at least one receiving side 13, 14 comprises provisioning the requested representation of the multimedia content at the delivery infrastructure 11 with a data rate different than the data rate of the provisioned representation. The respective receiving side 13, 14 determines at its side the communication conditions to adapt its request for the provisioning of a representation of the multimedia content, and may be implicitly manipulated to request a different representation. The control device 17 adapts the cache 16 to provision the requested representation either with an increased or a decreased data rate depending on the determined communication conditions. Pacing the provisioning of the representation of the multimedia content is preferred, since this is independent from the data network 12.

The control device 17 in an alternative embodiment is adapted to adapt the cache 16 to provision a representation of the multimedia content different than the requested representation to the at least one receiving side 13, 14 in response to the determined communication conditions. Accordingly, the respective receiving side 13, 14 receives the different representation and is indicated to switch to the provisioned representation.

Further, in case the requests are not local in time, i.e. are received at the cache 16 with a relatively long delay, the control device 17 adapts the provisioning of the multimedia content from the cache 16, so that provisioning of the requested representation of the multimedia content to the receiving side 13, 14 is delayed. Accordingly, the receiving side 13, 14 will be implicitly manipulated to request the representation of the multimedia content with a reduced delay, so that both requests can be served with a single preparation of the multimedia content in the cache 16.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

## Claims

1. Method for improving efficiency in adaptive streaming of multimedia content over a data network (12) via HTTP, whereby a delivery infrastructure (11) is adapted to provide the multimedia content at different representations with different data rates to at least one receiving side (13, 14), and each receiving side (13, 14) may request individually provisioning of one of the different representations of the multimedia content, comprising the steps of receiving at a control device (17) status information indicating a communication status, determining communication conditions from the received information, and adapting at the delivery infrastructure (11) for each receiving side (13, 14) the provisioning of the requested representation of the multimedia content in response to the determined communication conditions, wherein the step of receiving status information indicating a communication status comprises receiving information indicating an algorithm of the receiving side (13, 14) for requesting the provisioning of a representation of the multimedia content.

2. Method according to preceding claim 1, whereby the step of receiving status information indicating a communication status comprises receiving information indicating network condition of the data network (12) between the delivery infrastructure (11) and at least one receiving side (13, 14) .

3. Method according to preceding claim 1, whereby the delivery infrastructure (11) provides the multimedia content in segments, and the step of receiving status information indicating a communication status comprises receiving information indicating availability of segments of representations of the multimedia content, which are prepared for provisioning to the receiving side (13, 14).

4. Method according to preceding claim 1, whereby the step of receiving status information indicating a communication status comprises receiving information indicating a load status of the delivery infrastructure (11).

5. Method according to preceding claim 1, whereby the step of receiving status information indicating a communication status comprises receiving information from the at least one receiving side (13, 14), the data network (12), and/or the delivery infrastructure (11).

6. Method according to preceding claim 1, whereby the delivery infrastructure (11) comprises a cache (16), and the step of receiving status information indicating a communication status comprises receiving information from the cache (16).

7. Method according to preceding claim 1, whereby the step of determining communication conditions from the received information comprises calculating an available data rate of the delivery infrastructure (11).

8. Method according to preceding claim 1, whereby the step of determining communication conditions from the received information comprises comparing requests for provisioning of a representation of the content by different receiving sides (13, 14).

9. Method according to preceding claim 1, whereby the step of adapting at the delivery infrastructure (11) for the at least one receiving side (13, 14) the representation of the multimedia content in response to the determined communication conditions comprises provisioning the requested representation of the multimedia content at the delivery infrastructure (11) with a data rate different than the data rate of the provisioned representation.

10. Method according to preceding claim 1, whereby the step of adapting at the delivery infrastructure (11) for the at least one receiving side (13, 14) the representation of the multimedia content in response to the determined communication conditions comprises delaying provisioning of the requested representation of the multimedia content to the at least one receiving side (13, 14).

11. Method according to preceding claim 1, whereby the step of adapting at the delivery infrastructure (11) for each receiving side (13, 14) the provisioning of the requested representation of the multimedia content in response to the determined communication conditions comprises provisioning a different representation of the multimedia content than the requested representation of the multimedia content to the at least one receiving side (13, 14).

12. Control device (17) for improving efficiency in adaptive streaming of multimedia content over a data network (12) via HTTP, whereby a delivery infrastructure (11) is adapted to provide the multimedia content at different representations with different data rates to at least one receiving side (13, 14), and each receiving side (13, 14) may request individually provisioning of one of the different representations of the multimedia content, comprising a reception unit (19) for receiving status information indicating a communication status, a processing unit (20) for determining communication conditions from the received information, and an output unit (21) for providing to the delivery infrastructure (11) an adaptation of the provisioning of the requested representation of the multimedia content for the at least one receiving side (13, 14) in response to the determined communication conditions, wherein said control device (17) is configured to receive information indicating an algorithm of the receiving side (13, 14) for requesting the provisioning of a representation of the multimedia content.

13. Delivery infrastructure (11) with improved efficiency in adaptive streaming of multimedia content over a data network (12) via HTTP, whereby the delivery infrastructure (11) is adapted to provide the multimedia content at different representations with different data rates to at least one receiving side (13, 14), the delivery infrastructure (11) is adapted to receive a request from the at least one receiving side (13, 14) for provisioning of one of the different representations of the multimedia content, and the delivery infrastructure (11) comprises a control device (17) for improving efficiency in adaptive streaming according to preceding claim 12.

14. Delivery infrastructure (11) according to preceding claim 13, whereby the delivery infrastructure (11) comprises a cache (16) and a peripheral storage (15), and the control device (17) is adapted to provide the adaptation of the provisioning of the requested representation of the multimedia content for the at least one receiving side (13, 14) to the cache (16).

## Patentansprüche

1. Verfahren zur Verbesserung der Leistungsfähigkeit beim adaptiven Streaming von Multimediainhalten über ein Datennetz (12) über HTTP, wobei eine Übertragungsinfrastruktur (11) dazu bestimmt ist, die Multimediainhalte mit unterschiedlichen Darstellungen und unterschiedlichen Datenraten mindestens einer Empfängerseite (13, 14) bereitzustellen und jede Empfängerseite (13, 14) die Bereitstellung einer der unterschiedlichen Darstellungen der Multimediainhalte individuell anfordern kann, umfassend die Schritte: Empfangen von Statusinformationen an einer Steuervorrichtung (17), welche einen Kommunikationsstatus anzeigen, Ermitteln der Kommunikationsbedingungen anhand der empfangenen Informationen und Anpassen der Bereitstellung der gewünschten Darstellung der Multimediainhalte an die Übertragungsinfrastruktur (11) für jede Empfängerseite (13, 14) entsprechend den ermittelten Kommunikationsbedingungen, wobei der Schritt des Empfangens von Statusinformationen, die einen Kommunikationsstatus anzeigen, das Empfangen von Informationen umfasst, die einen Algorithmus der Empfängerseite (13, 14) zur Anforderung der Bereitstellung einer Darstellung der Multimediainhalte anzeigen.

2. Verfahren nach dem vorstehenden Anspruch 1, wobei der Schritt des Empfangens von Statusinformationen, die einen Kommunikationsstatus anzeigen, das Empfangen von Informationen umfasst, die Netzwerkbedingungen des Datennetzes (12) zwischen der Übertragungsinfrastruktur (11) und mindestens einer Empfängerseite (13, 14) anzeigen.

3. Verfahren nach dem vorstehenden Anspruch 1, wobei die Übertragungsinfrastruktur (11) die Multimediainhalte in Segmenten bereitstellt und der Schritt des Empfangens von Statusinformationen, die einen Kommunikationsstatus anzeigen, das Empfangen von Informationen umfasst, welche die Verfügbarkeit von Darstellungssegmenten der Multimediainhalte anzeigen, die zur Bereitstellung auf der Empfängerseite 813, 14) vorbereitet sind.

4. Verfahren nach dem vorstehenden Anspruch 1, wobei der Schritt des Empfangens von Statusinformationen, die einen Kommunikationsstatus anzeigen, das Empfangen von Informationen umfasst, die einen Laststatus der Übertragungsinfrastruktur (11) anzeigen.

5. Verfahren nach dem vorstehenden Anspruch 1, wobei der Schritt des Empfangens von Statusinformationen, die einen Kommunikationsstatus anzeigen, das Empfangen von Informationen von der mindestens einen Empfängerseite (13, 14), dem Datennetz (12) und/oder der Übertragungsinfrastruktur (11) umfasst.

6. Verfahren nach dem vorstehenden Anspruch 1, wobei die Übertragungsinfrastruktur (11) einen Pufferspeicher (16) umfasst und der Schritt des Empfangens von Statusinformationen, die einen Kommunikationsstatus anzeigen, das Empfangen von Informationen von dem Pufferspeicher (16) umfasst.

7. Verfahren nach dem vorstehenden Anspruch 1, wobei der Schritt des Ermittelns von Kommunikationsbedingungen anhand der empfangenen Informationen das Berechnen einer verfügbaren Datenrate der Übertragungsinfrastruktur umfasst.

8. Verfahren nach dem vorstehenden Anspruch 1, wobei der Schritt des Ermittelns von Kommunikationsbedingungen anhand der empfangenen Informationen das Vergleichen von Anforderungen zur Bereitstellung einer Darstellung des Inhalts von verschiedenen Empfängerseiten (13, 14) umfasst.

9. Verfahren nach dem vorstehenden Anspruch 1, wobei der Schritt des Anpassens der Darstellung der Multimediainhalte an die Übertragungsinfrastruktur (11) für die mindestens eine Empfängerseite (13, 14) entsprechend den ermittelten Kommunikationsbedingungen das Bereitstellen der angeforderten Darstellung der Multimediainhalte für die Übertragungsinfrastruktur (11) mit einer Datenrate umfasst, die von der Datenrate der bereitgestellten Darstellung verschieden ist.

10. Verfahren nach dem vorstehenden Anspruch 1, wobei der Schritt des Anpassens der Darstellung der Multimediainhalte an die Übertragungsinfrastruktur (11) für die mindestens eine Empfängerseite (13, 14) entsprechend den ermittelten Kommunikationsbedingungen das Verzögern der Bereitstellung der angeforderten Darstellung der Multimediainhalte für die mindestens eine Empfängerseite (13, 14) umfasst.

11. Verfahren nach dem vorstehenden Anspruch 1, wobei der Schritt des Anpassens der Bereitstellung der angeforderten Darstellung der Multimediainhalte an die Übertragungsinfrastruktur (11) für jede Empfängerseite (13, 14) entsprechend den ermittelten Kommunikationsbedingungen das Bereitstellen einer Darstellung der Multimediainhalte für die mindestens eine Empfängerseite (13, 14) umfasst, die von der angeforderten Darstellung der Multimediainhalte verschieden ist.

12. Steuervorrichtung (17) zur Verbesserung der Leistungsfähigkeit beim adaptiven Streaming von Multimediainhalten über ein Datennetz (12) über HTTP, wobei eine Übertragungsinfrastruktur (11) dazu bestimmt ist, die Multimediainhalte mit unterschiedlichen Darstellungen und unterschiedlichen Datenraten mindestens einer Empfängerseite (13, 14) bereitzustellen und jede Empfängerseite (13, 14) die Bereitstellung einer der unterschiedlichen Darstellungen der Multimediainhalte individuell verlangen kann, umfassend eine Empfangseinheit (19) zum Empfang von Statusinformationen, die einen Kommunikationsstatus anzeigen, eine Verarbeitungseinheit (20) zur Ermittlung von Kommunikationsbedingungen anhand der empfangenen Informationen und eine Ausgabeeinheit (21), welche der Übertragungsinfrastruktur (11) eine Anpassung der entsprechend den ermittelten Kommunikationsbedingungen erfolgten Bereitstellung der angeforderten Darstellung der Multimediainhalte für die mindestens eine Empfängerseite (13, 14) bereitstellt, wobei die Steuervorrichtung (17) so ausgelegt ist, dass sie Informationen empfängt, die einen Algorithmus der Empfängerseite (13, 14) zur Anforderung der Bereitstellung einer Darstellung der Multimediainhalte anzeigen.

13. Übertragungsinfrastruktur (11) mit verbesserter Leistungsfähigkeit beim adaptiven Streaming von Multimediainhalten über ein Datennetz (12) über HTTP, wobei die Übertragungsinfrastruktur (11) dazu bestimmt ist, die Multimediainhalte mit unterschiedlichen Darstellungen und unterschiedlichen Datenraten mindestens einer Empfängerseite (13, 14) bereitzustellen, sowie dazu, von der mindestens einen Empfängerseite (13, 14) eine Anforderung für die Bereitstellung einer der unterschiedlichen Darstellungen der Multimediainhalte zu empfangen, wobei die Übertragungsinfrastruktur (11) eine Steuervorrichtung (17) zur Verbesserung der Leistungsfähigkeit beim adaptiven Streaming gemäß dem vorstehenden Anspruch 12 umfasst.

14. Übertragungsinfrastruktur (11) nach dem vorstehenden Anspruch 13, wobei die Übertragungsinfrastruktur (11) einen Pufferspeicher (16) und einen peripheren Speicher (15) umfasst und die Steuervorrichtung (17) so ausgelegt ist, dass sie die Anpassung der Bereitstellung der angeforderten Darstellung der Multimediainhalte für die mindestens eine Empfängerseite (13, 14) dem Pufferspeicher (16) bereitstellt.

## Revendications

1. Procédé pour améliorer l'efficacité de la diffusion adaptative de contenu multimédia sur un réseau de données (12) via HTTP, grâce auquel une infrastructure de livraison (11) est adaptée pour fournir le contenu multimédia, pour différentes représentations, avec des cadences de transfert des données différentes, à au moins un côté récepteur (13, 14), et dans lequel chaque côté récepteur (13, 14) peut demander individuellement la fourniture de l'une des différentes représentations du contenu multimédia, comprenant les étapes consistant à recevoir, au niveau d'un dispositif de commande (17), des informations d'état indiquant un état de la communication, déterminer les conditions de la communication à partir des informations reçues, et adapter, au niveau de l'infrastructure de livraison (11), pour chaque côté récepteur (13, 14), la fourniture de la représentation demandée du contenu multimédia en réponse aux conditions de la communication déterminées, dans lequel l'étape de réception des informations d'état indiquant un état de la communication comprend la réception d'informations indiquant un algorithme du côté récepteur (13, 14) pour demander la fourniture d'une représentation du contenu multimédia.

2. Procédé selon la revendication 1 précédente, grâce auquel l'étape de réception des informations d'état indiquant un état de la communication comprend la réception d'informations d'état indiquant un état du réseau pour le réseau de données (12) entre l'infrastructure de livraison (11) et au moins un côté récepteur (13, 14).

3. Procédé selon la revendication 1 précédente, grâce auquel l'infrastructure de livraison (11) fournit le contenu multimédia sous la forme de segments, et l'étape de réception d'informations d'état indiquant un état de la communication comprend la réception d'informations indiquant la disponibilité des segments de représentation du contenu multimédia, qui sont préparés pour être fournis au côté récepteur (13, 14).

4. Procédé selon la revendication 1 précédente, grâce auquel l'étape de réception d'informations d'état indiquant un état de la communication comprend la réception d'informations indiquant un état de charge de l'infrastructure de livraison (11).

5. Procédé selon la revendication 1 précédente, grâce auquel l'étape de réception d'informations d'état indiquant un état de la communication comprend la réception d'informations provenant du au moins un côté récepteur (13, 14), du réseau de données (12), et/ou de l'infrastructure de livraison (11).

6. Procédé selon la revendication 1 précédente, grâce auquel l'infrastructure de livraison (11) comprend un cache (16), et l'étape de réception d'informations d'état indiquant un état de la communication comprend la réception d'informations provenant du cache (16).

7. Procédé selon la revendication 1 précédente, grâce auquel l'étape de détermination des conditions de la communication à partir des informations reçues comprend le calcul d'une cadence de transfert des données disponibles de l'infrastructure de livraison (11).

8. Procédé selon la revendication 1 précédente, grâce auquel l'étape de détermination des conditions de la communication à partir des informations reçues comprend la comparaison des demandes de fourniture d'une représentation du contenu par différents côtés récepteurs (13, 14).

9. Procédé selon la revendication 1 précédente, grâce auquel l'étape d'adaptation, au niveau de l'infrastructure de livraison (11), pour le au moins un côté récepteur (13, 14), de la représentation du contenu multimédia en réponse aux conditions de la communication déterminées, comprend la fourniture de la représentation demandée du contenu multimédia au niveau de l'infrastructure de livraison (11), avec une cadence de transfert des données différente de la cadence de transfert des données de la représentation fournie.

10. Procédé selon la revendication 1 précédente, grâce auquel l'étape d'adaptation, au niveau de l'infrastructure de livraison (11), pour le au moins un côté récepteur (13, 14), de la représentation du contenu multimédia en réponse aux conditions de la communication déterminées, comprend le retardement de la fourniture de la représentation demandée du contenu multimédia au au moins un côté récepteur (13, 14).

11. Procédé selon la revendication 1 précédente, grâce auquel l'étape d'adaptation, au niveau de l'infrastructure de livraison (11), pour chaque côté récepteur (13, 14), de la fourniture de la représentation demandée du contenu multimédia en réponse aux conditions de la communication déterminées, comprend la fourniture d'une représentation différente du contenu multimédia de la représentation demandée du contenu multimédia au au moins un côté récepteur (13, 14).

12. Dispositif de commande (17) pour améliorer l'efficacité de la diffusion adaptative de contenu multimédia sur un réseau de données (12) via HTTP, grâce auquel une infrastructure de livraison (11) est adaptée pour fournir le contenu multimédia, pour différentes représentations, avec des cadences de transfert des données différentes, à au moins un côté récepteur (13, 14), et chaque côté récepteur (13, 14) peut demander individuellement la fourniture de l'une des différentes représentations du contenu multimédia, comprenant une unité de réception (19) pour recevoir des informations d'état indiquant un état de la communication, une unité de traitement (20) pour déterminer les conditions de la communication à partir des informations reçues, et une unité de sortie (21) pour fournir, à l'infrastructure de livraison (11) une adaptation de la fourniture de la représentation demandée du contenu multimédia pour le au moins un côté récepteur (13, 14) en réponse aux conditions de la communication déterminées, dans lequel ledit dispositif de commande (17) est configuré pour recevoir des informations indiquant un algorithme du côté récepteur (13, 14) pour demander la fourniture d'une représentation du contenu multimédia.

13. Infrastructure de livraison (11) ayant une efficacité améliorée de la diffusion adaptative d'un contenu multimédia sur un réseau de données (12) via HTTP, grâce à laquelle l'infrastructure de livraison (11) est adaptée pour fournir le contenu multimédia, pour différentes représentations, avec des cadences de transfert des données différentes, à au moins un côté récepteur (13, 14), l'infrastructure de livraison (11) est adaptée pour recevoir une demande provenant du au moins un côté récepteur (13, 14) pour fournir l'une des différentes représentations du contenu multimédia, et l'infrastructure de livraison (11) comprend un dispositif de commande (17) pour améliorer l'efficacité de la diffusion adaptative selon la revendication 12 précédente.

14. Infrastructure de livraison (11) selon la revendication 13 précédente, grâce à laquelle ladite infrastructure de livraison (11) comprend un cache (16) et un stockage périphérique (15), et le dispositif de commande (17) est adapté pour fournir l'adaptation de la fourniture de la représentation demandée du contenu multimédia pour le au moins un côté récepteur (13, 14) au cache (16).
